# NEUE EUROPÄISCHE PATENTSCHRIFT

(11) **EP 2 387 534 B2**
(45) Veröffentlichungstag und Bekanntmachung des Hinweises auf die Entscheidung über den Einspruch: **27.05.2020**
(45) Hinweis auf die Patenterteilung: 23.03.2016
(21) Anmeldenummer: 09774641.6
(22) Anmeldetag: 15.12.2009
(51) Int. Cl.: B65C 9/04, B65C 3/16, B65G 47/244

(54) **BEHÄLTERBEHANDLUNGSMASCHINE**
CONTAINER TREATMENT MACHINE
MACHINE DE TRAITEMENT DE CONTENANTS

(30) Priorität: 15.01.2009 DE 102009005180
(43) Veröffentlichungstag der Anmeldung: 23.11.2011
(73) Patentinhaber: KHS GmbH, 44143 Dortmund (DE)
(72) Erfinder: KRÄMER, Klaus, 44267 Dortmund (DE); STIENEN, Thomas, 59425 Unna (DE)
(74) Vertreter: Glück Kritzenberger Patentanwälte PartGmbB
(86) Internationale Anmeldenummer: PCT/EP2009/008954
(87) Internationale Veröffentlichungsnummer: WO 2010/081515

(56) Entgegenhaltungen:
- DE-A1- 2 027 416
- DE-A1- 2 147 770
- DE-A1- 3 327 492
- DE-A1- 3 424 081
- DE-A1- 10 339 473
- GB-A- 2 151 592
- US-A- 5 419 094
- US-A1- 2006 086 410

## Beschreibung

Die Erfindung bezieht sich auf eine Behälterbehandlungsmaschine umlaufender Bauart gemäß Oberbegriff Patentanspruch 1.

Behälter sind im Sinne der Erfindung Behälter oder behälterartige Packmittel jeglicher Art, wie sie zum Verpacken von Produkten beispielsweise von Getränken, Nahrungsmitteln, Kosmetika, Arzneimittel usw. verwendet werden. Behälter sind im Sinne der vorliegenden Erfindung dementsprechend insbesondere auch Flaschen, Dosen oder andere flaschen- oder dosenartige Behälter aus unterschiedlichsten Werkstoffen, z.B. aus Metall, Glas oder Kunststoff, beispielsweise PET.

Behälterbehandlungsmaschinen und solche umlaufender Bauart sind insbesondere auch als Etikettiermaschinen in verschiedenster Ausführung bekannt. Bekannte Behälterbehandlungsmaschinen umlaufender Bauart umfassen u.a. einen um eine vertikale Maschinenachse umlaufend antreibbaren Kreisel oder Rotor, der an wenigstens einem (ersten) Rotorelement mehrere z.B. gesteuert dreh- oder schwenkbare Behälterträger, beispielsweise in Form von Behältertellern bildet.

Weiterhin umfassen derartige Behälterbehandlungsmaschinen wenigstens ein weiteres (zweites) Rotorelement, welches mit dem ersten Rotorelement fest verbunden ist, und mehrere, jeweils einen Behälterträger zugeordnete Funktionselemente z.B. in Form von Halte- oder Zentrierelementen aufweist, die beispielsweise durch eine Steuerkurve an einem mit dem Rotor nicht umlaufenden Abschnitt eines Maschinenrahmens (Trägerelement als Hubkurventräger) gesteuert bewegbar sind, beispielsweise um einen vorgegebenen Hub in vertikaler Richtung, d.h. parallel zur Maschinenachse auf und ab bewegbar sind.

Bei Ausbildung als Etikettiermaschine werden die zu behandelnden, d,h. zu etikettierenden Behälter den am Rotor von jeweils einem Behälterträger und einem Zentrierelement gebildeten Behandlungsstationen oder -positionen über einen Behältereinlauf nach einander zugeführt, wobei das jeweilige Zentrierelement unmittelbar bei der Übergabe eines Behälters an eine Behandlungsposition auf die Oberseite oder den Kopf des Behälters gesteuert durch die Hubkurve abgesenkt wird, sodass der Behälter für die Behandlung mit seiner vertikalen Behälterachse in Bezug auf den Behälterträger bzw. dessen Achse zentriert wird und zwischen dem Behälterträger und dem Zentrierelement eingespannt gehalten ist. Die Behandlung der Behälter erfolgt während der Drehbewegung des Rotors im Winkelbereich zwischen dem Behältereinlauf und dem Behälterauslauf, an dem die Behälter von der jeweiligen Behandlungsposition nach Anheben des jeweiligen Zentrierelementes durch die Hubkurve abgenommen werden.

Nachteilig ist bei bekannten Behälterbehandlungsmaschinen umlaufender Bauart u.a., dass der wenigstens eine, die wenigstens eine Hubkurve aufweisende Hubkurventräger mit einem Lager, beispielsweise mit einem Gleitlagers auf dem um die Maschinenachse umlaufend antreibbaren Rotor gelagert werden muss und zumindest eine Drehmomentstütze erforderlich ist, die den Hubkurventräger mit einem mit dem Rotor nicht umlaufenden Teil des Maschinengestells verbindet, um ein Mitdrehen des Hubkurventrägers mit dem umlaufend angetriebenen Rotor zu vermeiden.

Nachteilig ist bei bekannten Behälterbehandlungsmaschinen umlaufender Bauart u.a. auch, dass Lager- oder Trägerelemente, die innerhalb der kreisförmigen Bewegungsbahn der Behälterträger oder Behandlungspositionen angeordnet sind und zur Aufnahme von mit dem Rotor nicht mitdrehenden Funktionselementen dienen, beispielsweise zur Aufnahme von Andrückelementen oder Bürsten zum Andrücken oder Anbürsten von Etiketten an die Behälter beim Etikettieren, zur Aufnahme von Druckern oder Druckköpfen zum Bedrucken der Behälter, Kameras, Sensoren, Beleuchtungseinrichtungen usw., ebenfalls mit Lagern an dem Rotor gelagert und zur Vermeidung eines Mitdrehens mit dem Rotors über Drehmomentstützen mit dem mit dem Rotor nicht umlaufenden Maschinengestell verbunden werden müssen. Derartige Drehmomentstützen sind dann im Winkelbereich der Drehbewegung des Rotors zwischen dem Behälterauslauf und dem Behältereinlauf vorgesehen, in welchem (Winkelbereich) sich zumindest im normalen störungsfreien Betrieb keine Behälter an den Behandlungspositionen befinden.

Die bekannten Behandlungsmaschinen umlaufender Bauart erfordern einen erheblichen konstruktiven Aufwand, wobei die baulichen Verhältnisse darüber hinaus äußerst nachteilig sind. So wird zwar durch die Lagerung der mit dem Rotor nicht mitdrehenden Tragerelemente am umlaufenden Rotor und durch die Verwendung von Drehmomentstützen ein Mitdrehen des jeweiligen Trägerelementes, z.B. Hubkurventrägers sowie des Trägerelementes für die weiteren Funktionselemente, mit dem Rotor verhindert, die Lagerung auf dem Rotor verursacht aber permanente Erschütterungen, einen unerwünschten Wärmeeintrag durch Reibung und nicht unerhebliche Verschmutzungen der Behandlungsmaschine durch austretende Schmiermittel.

Bekannt ist eine Behandlungsmaschine umlaufender Bauart (DE 34 24 081 A1). Diese bekannte Behandlungsmaschine ist als Etikettiermaschine ausgeführt, und zwar zum Etikettieren von Flaschen mit die Flaschen banderolenartig umschließenden Etiketten. Im Wesentlichen besteht die bekannte Maschine aus einer oberen, von zwei Kreisscheiben gebildeten Rotoranordnung, an der eine Vielzahl von Greifern für jeweils eine Flasche vorgesehen ist, sowie aus einem unteren Rotor, an dessen Umfang mehrere Wickeldorne vorgesehen sind. Letztere dienen jeweils zum Formen eines banderolenartigen, auf einen Behälter aufzubringenden Etiketts und sind jeweils einem Greifer zugeordnet. Die obere Rotoranordnung für die Greifer und der Rotor für die Wickeldorne sind jeweils gesondert um eine gemeinsame vertikale Maschinenachse drehbar gelagert und von einem gemeinsamen Antriebsmotor über Getriebe und Transmissionen um die vertikale Maschinenachse umlaufend angetrieben.

Bekannt ist weiterhin eine Behandlungsmaschine umlaufender Bauart zum Behandeln von Behältern in Form einer Vorrichtung zum Prüfen von Behältern(DE 103 39 437 A1). Diese Behandlungsmaschine besteht im Wesentlichen aus einem um eine vertikale Maschinenachse drehbaren Rotor mit Behälteraufnahmen und aus einer ebenfalls um die vertikale Maschinenachse drehbaren Kamera- und Spiegelanordnung. Weiterhin bekannt ist eine Behälterbehandlungsmaschine gemäß Oberbegriff Patentanspruch 1 (DE 33 27 492 A1).

Aufgabe der Erfindung Ist es, eine Behälterbehandlungsmaschine aufzuzeigen, die die vorgenannten Nachteile vermeidet und bei der mindestens ein nicht mit dem Rotor mitdrehendes Trägerelement realisiert ist, und zwar ohne die Notwendigkeit einer oder mehrerer Drehmomentstützen.

Zur Lösung dieser Aufgabe ist eine Behälterbehandlungsmaschine entsprechend dem Patentanspruch 1 ausgebildet.

Die Besonderheit der Erfindung besteht darin, dass das wenigstens eine erste Rotorelement, welches den Behälterträger bildet oder mit einer Vielzahl von vorzugsweise gesteuert dreh- oder schwenkbaren Behälterträgern ausgeführt Ist, und das wenigstens eine weitere Trägerelement unabhängig voneinander um die Maschinenachse drehbar gelagert und durch die Antriebsmittel angetrieben sind.

Nach einem ersten Aspekt der Erfindung erfolgt dieser Antrieb durch Antriebsmittel derart, dass das wenigstens eine Trägerelement synchron und gleichsinnig mit dem wenigstens einen Rotorelement umläuft und somit ein weiteres Rotorelement bildet, welches mit dem Rotor umläuft und an welchem z.B. mit den Behältern zusammenwirkende und mit dem Rotor mitbewegte Funktionselemente, beispielsweise Zentrierelemente vorgesehen sind.

Nach einem zweiten Aspekt der Erfindung erfolgt der Antrieb durch Antriebsmittel derart, dass das wenigstens eine Trägerelement zwar synchron mit dem wenigstens einen Rotorelement oder mit dem Rotor, aber gegensinnig zu der Drehbewegung des Rotors angetrieben wird, so dass das Trägerelement in Bezug auf den umlaufenden Rotor stehend vorgesehen ist und das Trägerelement einen Träger bildet, auf dem mit dem Rotor nicht mitdrehende und vorzugsweise mit den Behältern zusammenwirkende Funktionselemente, wie z.B. Andrückelemente und/oder Bürsten, Drucker, Sensoren, Kameras, insbesondere auch zum Inspizieren und/oder Ausrichten der Behälter usw. angeordnet werden können.

Im ersten Fall sind das, ein weiteres Rotorelement bildende Trägerelement und das erste Rotorelement bevorzugt jeweils an einem Maschinengestell drehbar gelagert, und zwar beide Rotorelemente jeweils mit wenigstens einem eigenständigen Lager. Im zweiten Fall ist das Trägerelement am Rotor um die Maschinenachse drehbar gelagert.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung.

Die Erfindung wird im Folgenden anhand der Figuren, die jeweils in vereinfachter schematischer Darstellung und im Vertikalschnitt eine Behälterbehandlungsmaschine umlaufender Bauart zeigen, näher erläutert.

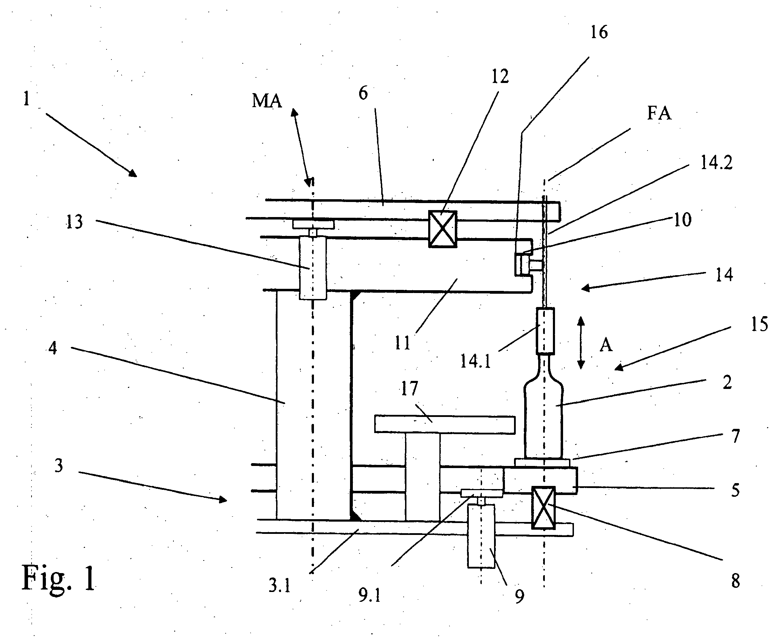

In der Figur 1 ist 1 eine Behälter- oder Flaschenbehandlungsmaschine umlaufender Bauart zum Behandeln von Behältern in Form von Flaschen 2, beispielsweise zum Etikettieren und/oder Bedrucken der Flaschen 2. Die Behälterbehandlungsmaschine 1 umfasst u.a. ein Maschinengestell 3 mit einer achsgleich mit einer vertikalen Maschinenachse MA angeordneten mittigen Tragsäule 4 sowie einen um die Maschinenachse MA beim Behandeln der Flaschen 2 umlaufend angetriebenen Rotor, der bei der dargestellten Ausführungsform aus einem unteren kreisringartigen Rotorelement 5 und einem oberen Rotor- oder Trägerelement 6 besteht. Das Rotorelement 5 und das Trägerelement 6 sind mit ihren Achsen achsgleich mit der Maschinenachse MA angeordnet. Das Rotorelement 5 ist an seiner Oberseite mit einer Vielzahl von Flaschentellern 7 versehen, die als Behälterträger jeweils eine Standfläche für die Flaschen 2 bildenden, in gleichmäßigen Winkelabständen um die Maschinenachse MA verteilt vorgesehen und vorzugsweise um ihre Achsen FA parallel zur Maschinenachse MA gesteuert dreh- oder schwenkbar sind. Über ein in der Figur 1 schematisch mit 8 bezeichnetes Lager, welches beispielsweise von einer Kugel-Drehverbindung gebildet ist, ist das Rotorelement 5 an dem unteren Abschnitt 3.1 des Maschinengestells 3 um die Achse MA drehbar gelagert.

Ein in der Figur 1 schematisch mit 9 bezeichneter Antrieb, der mit einem Ritzel 9.1 mit einer Verzahnung an der Innenseite des Rotorelementes 5 zusammenwirkt, dient zum Antrieb dieses Rotorelementes um die Achse MA. An der Oberseite der Tragsäule 4 ist ein über diese Tragsäule 4 radial weg stehendes und außen liegend mit einer Steuer- oder Hubkurve 10 ausgebildetes Element 11 (Hubkurventräger) des Maschinenrahmens 3 vorgesehen. Auf dem Hubkurventräger 11 ist mittels eines Lagers 12 das obere Trägerelement 6 um die Achse MA drehbar gelagert, wobei das Lager 12 beispielsweise wiederum eine Kugeldrehverbindung ist. Für den Antrieb des Trägerelementes 6 um die Maschinenachse MA dient der in der Figur 1 schematisch dargestellte und an dem Maschinengestell 3 vorgesehene Antrieb 13.

Die Antriebe 9 und 13 sind Einzelantriebe, die einen synchronen und gleichsinnigen, d.h. einen synchronen drehzahl- und winkelrichtigen Umlauf des Rotorelementes 5 und des Trägerelementes 6 beim Betrieb der Behälterbehandlungsmaschine 1 ermöglichen, beispielsweise Antriebe mit steuerbaren elektrischen Synchron- oder Schrittmotoren. Grundsätzlich besteht aber auch die Möglichkeit, dass die Antriebe 9 und 13 einen gemeinsamen Antriebsmotor aufweisen, der dann über entsprechende Getriebe antriebsmäßig mit dem Rotorelement 5 und dem Trägerelement 6 verbunden ist.

In dem oberen Trägerelement 6 sind in gleichmäßigen Winkelabständen um die Maschinenachse MA verteilt mehrere Zentrierelemente 14 mit Zentriertulpen 14.1 vorgesehen, und zwar derart, dass sich jeweils ein Zentrierelement 14 über einem Flaschenteller 7 befindet und mit seiner Achse achsgleich mit der Achse FA des betreffenden Flaschentellers 7 angeordnet ist, sodass ein Flaschenteller 7 und ein Zentrierelement 14 jeweils eine Behandlungsposition am Umfang des um die Maschinenachse MA umlaufend antreibbaren Rotors 5/6 bildet. Jede Zentriertulpe 14.1 ist am unteren Ende einer Zentriertulpenstange 14.2 gehalten, die mit ihrer Achse parallel zur Maschinenachse MA angeordnet und axial in dem Trägerelement 6 verschiebbar gelagert ist, und zwar gesteuert durch eine in die Hubkurve 10 eingreifende und an der Zentriertulpenstange 14.2 vorgesehene Steuerrolle 16, wie dies in der Figur 1 mit dem Doppelpfeil A angedeutet ist.

Am Maschinengestell 3 sind weiterhin mit dem Rotor 5/6 nicht umlaufende Funktionselemente vorgesehen, beispielsweise bei Ausbildung der Behälterbehandlungsmaschine 1 als Etikettiermaschine u.a. der in der Figur 1 schematisch angedeutete Bürsten- oder Bürstenkanalhalter 17 und die an diesem vorgesehenen, in der Figur 1 aber nicht dargestellten Bürsten, mit denen das jeweilige von einem Etikettieraggregat der Behandlungsmaschine 1 an eine Flasche 2 übergebene Etikett an diese Flasche angelegt bzw. angebürstet wird, wie dies dem Fachmann bekannt ist.

Eine Besonderheit der Behälterbehandlungsmaschine 1 besteht darin, dass sämtliche, mit dem Rotor 5/6 nicht mitdrehende oder umlaufende Funktionselemente der Behälterbehandlungsmaschine, insbesondere der Hubkurventräger 11 und weitere Funktionselemente, wie z.B. der Bürsten- oder Bürstenkanalhalter 17 unmittelbar am Maschinengestell 3 vorgesehen sind. Üblicherweise bei Behälterbehandlungsmaschinen, insbesondere auch bei Etikettiermaschinen notwendige, ein Mitdrehen solcher Funktionselemente mit dem Rotor 5/6 verhindernde Drehmomentaufnahmen oder -stützen, die in der Regel einen erheblichen konstruktiven Aufwand bedeuten, sind vermieden. Eine weitere Besonderheit besteht auch darin, dass durch die Ausbildung des unteren, die Standflächen (Flaschenteller) für die Behälter oder Flaschen 2 bildende Rotorelemente 5 als Ring der Raum innerhalb dieses Rotorelementes für die Unterbringung weiterer, mit dem Rotor 5/6 nicht umlaufender Funktionselemente frei gehalten ist, d.h. u.a. für die Unterbringung der Bürsten- oder Bürstenkanalhalter 17.

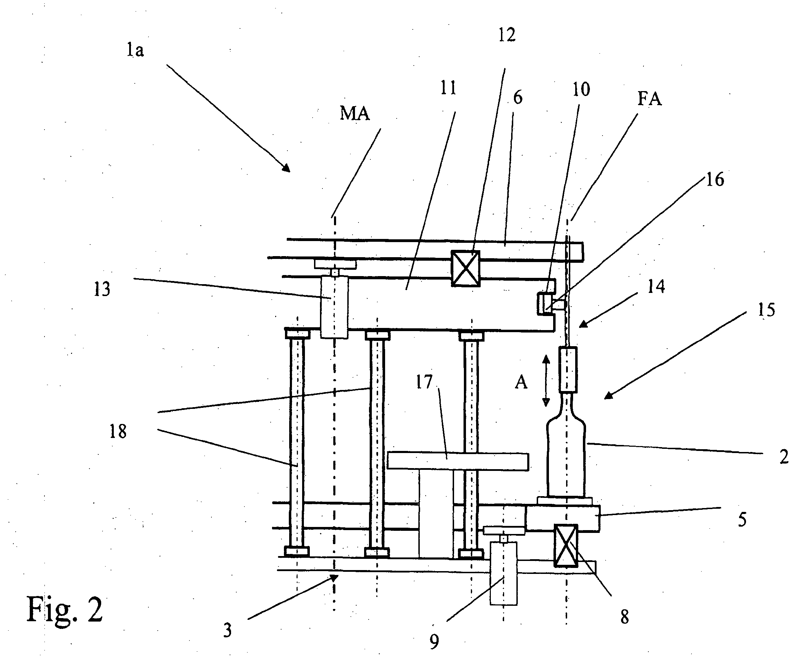

Die Figur 2 zeigt als weitere Ausführungsform eine Behälterbehandlungsmaschine 1a, die sich von der Behälterbehandlungsmaschine 1 im Wesentlichen nur dadurch unterscheidet, dass anstelle der einzigen Tragsäule 4 das Maschinengestell 3a mehrere mit ihren Achse parallel zur Maschinenachse MA angeordnete Tragsäulen 18 aufweist, die beispielsweise in gleichmäßigen Winkelabständen um die Maschinenachse MA verteilt vorgesehen sind, und zwar jeweils mit dem selben radialen Abstand von der Maschinenachse MA. An den oberen Enden der Tragsäulen 18 ist der Hubkurventräger 11 befestigt, der wiederum außen liegend die Hubkurve 10 aufweist und radial über die von den Tragsäulen 18 gebildete Tragsäulenanordnung vorsteht. Ansonsten entspricht die Behälterbehandlungsmaschine 1 a der Behälterbehandlungsmaschine 1, insbesondere auch hinsichtlich der Lagerung und des Antriebs des Rotorelementes 5 und des Trägerelementes 6 mittels der Lager 8 und 12 und der Antriebe 9 und 13.

Durch die Verwendung einer Vielzahl von Tragsäulen 18, die auch in größerem Abstand von der Maschinenachse MA angeordnet werden können ergibt sich eine käfigartige Struktur mit einer erhöhten Festigkeit und Steifigkeit für das Maschinengestellt 3, insbesondere auch für die Anordnung des die Hubkurve 10 aufweisenden Hubkurventrägers11.

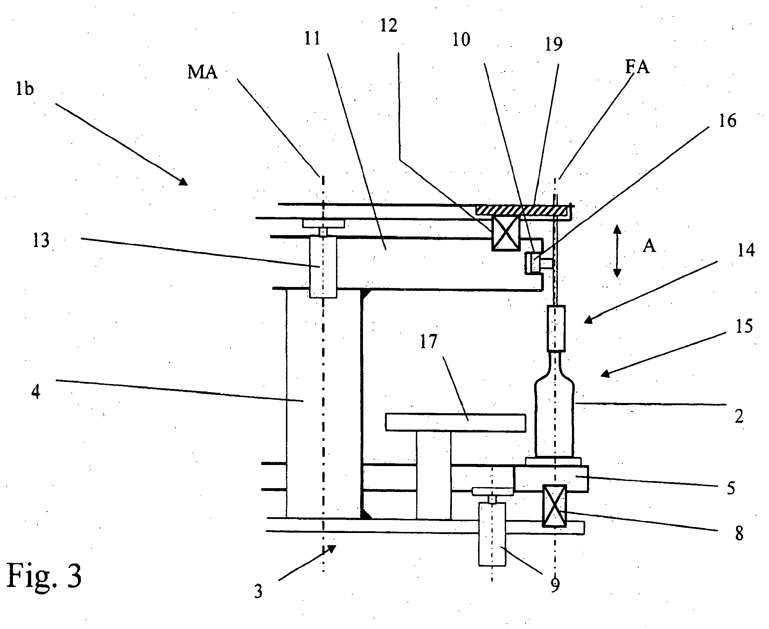

Die Figur 3 zeigt als weitere Ausführungsform eine Behälterbehandlungsmaschine 1b, die sich von der Behandlungsmaschine 1 im Wesentlichen nur dadurch unterscheidet, dass anstelle des scheibenförmigen oberen Trägerelementes 6 ein kreisringförmiges, achsgleich mit der Maschinenachse MA ausgebildetes oberes Trägerelement 19 vorgesehen ist, welches Teil des Rotors 5/19 ist und an welchem die Zentrierelemente 14 gesteuert durch die Hubkurve 10 axial verschiebbar vorgesehen sind. Das Trägerelement 19 ist an der der Tragsäule 4 abgewandten Oberseite des Hubkurventrägers 11 mit dem Lager 12 um die Maschinenachse MA drehbar gelagert. Für den Antrieb des Rotorelementes 19 dient wiederum der Antrieb 13, der bei dieser Ausführungsform mit einem Ritzel 13.1 mit einer Verzahnung an der Innenseite des kreisringförmigen Rotorelementes 19 zusammenwirkt.

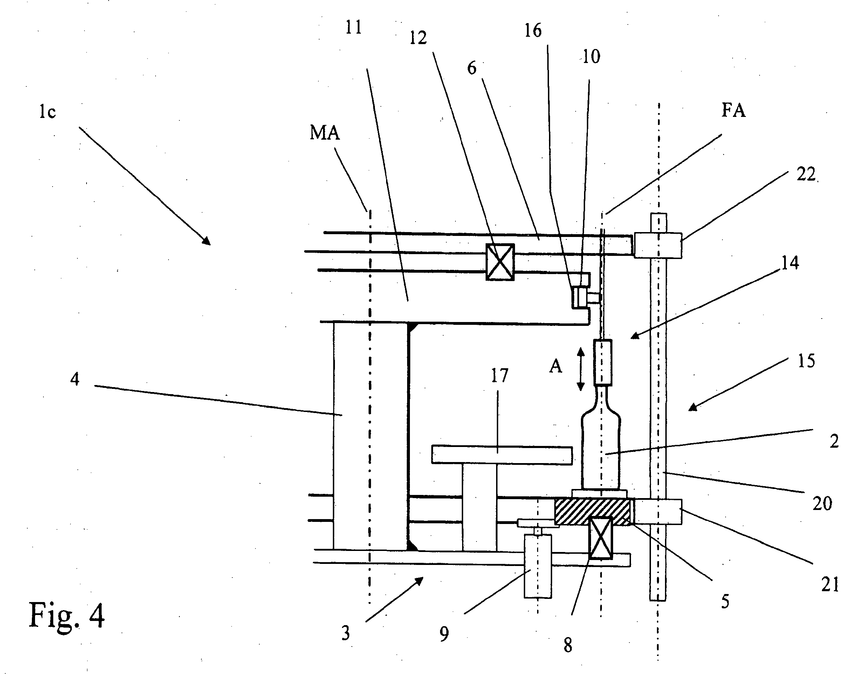

Die Figur 4 zeigt eine nicht erfindungsgemäße Behälterbehandlungsmaschine 1c, die sich von der Behälterbehandlungsmaschine 1 lediglich dadurch unterscheidet, dass der Antreib 9 für das Rotorelement 5 und das Trägerelement 6 gemeinsam vorgesehen ist. Hierfür ist das Trägerelement 6 antriebsmäßig mit dem Rotorelement 5 verbunden, und zwar über eine Welle 20, die mit ihrer Achse parallel zur Maschinenachse MA orientiert drehbar am Maschinengestell 3 gelagert ist. Auf der bezogen auf die Maschinenachse MA gegenüber dem Rotorelement 5 und dem Trägerelement 6 radial nach außen versetzten Welle 20 sind zwei Zahnräder 21 und 22 vorgesehen, von denen das Zahnrad 21 in eine Außenverzahnung des Rotorelementes 5 und das Zahnrad 22 in eine Außenverzahnung des Trägerelementes 6 eingreift.

Grundsätzlich besteht bei dieser Ausführung auch die Möglichkeit, den Antrieb des Rotorelementes 5 und des Trägerelementes 6 über die Welle 20 bzw. über einen diese Welle antreibenden Antrieb oder Motor vorzunehmen, womit der Antrieb 9 dann entfallen würde.

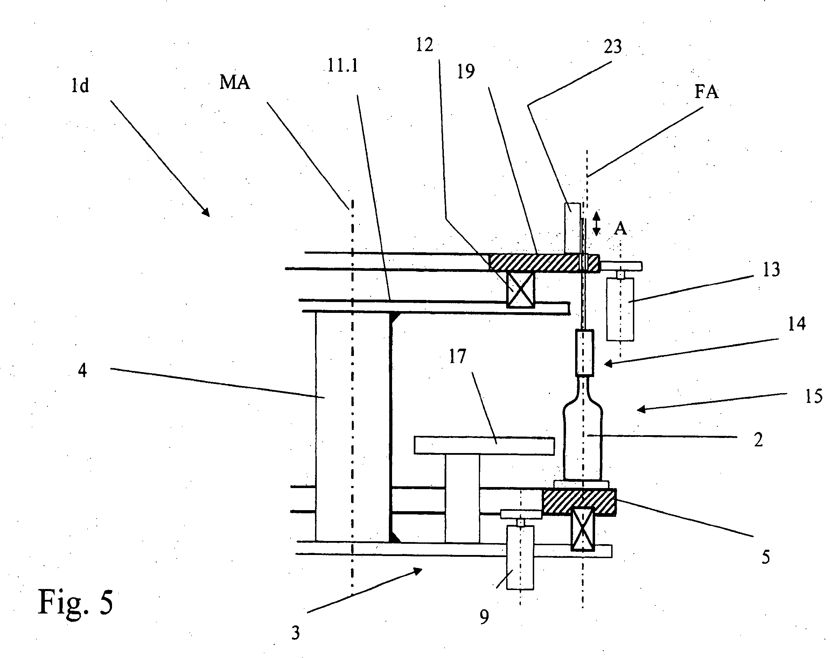

Die Figur 5 zeigt als weitere Ausführungsform eine Behälterbehandlungsmaschine 1d, die sich von der Behälterbehandlungsmaschine 1b im Wesentlichen nur dadurch unterscheidet, dass das gesteuerte Auf- und Abbewegen der Zentrierelemente 14 nicht durch eine Hubkurve erfolgt, sondern jeweils durch ein motorisches Betätigungselement 23, welches an dem kreisringförmigen Trägerelement 19 für jede Zentriertulpe 14.1 gesondert vorgesehen ist und für das Auf- und Abbewegen der zugehörigen Zentriertulpe 14.1 von einer Steuereinrichtung in Abhängigkeit von der Drehstellung des von dem Rotorelement 5 und dem Trägerelement 19 gebildeten Rotors 5/19 gesteuert wird. Jedes Betätigungselement 23 weist hierfür beispielsweise ein pneumatisch oder hydraulisch oder elektrisch betätigbares Stellglied auf, z.B. wenigstens einen entsprechenden Hydraulik- oder Pneumatik-Zylinder oder einen elektromotorischen oder elektromagnetischen Antrieb usw.

Durch den Wegfall der Hubkurve 10 und der mit dieser zusammenwirkenden Steuerrollen 16 dient das scheiben- oder speichenradartige Lagerelement 11.1 an der Oberseite der Tragsäule 4 ausschließlich zur Abstützung und Lagerung des oberen Trägerelementes 19 über das Lager 12. Abweichend von der Darstellung der Figur 3 ist bei der Behälterbehandlungsmaschine 1 d der Antrieb 13 für das obere Trägerelement 19 am Maschinengestell 3 so vorgesehen, dass das Ritzel 13.1 mit einer Verzahnung an der Außenseite des ringartigen Rotorelementes 19 zusammenwirkt. Ansonsten entspricht die Behälterbehandlungsmaschine 1 b.

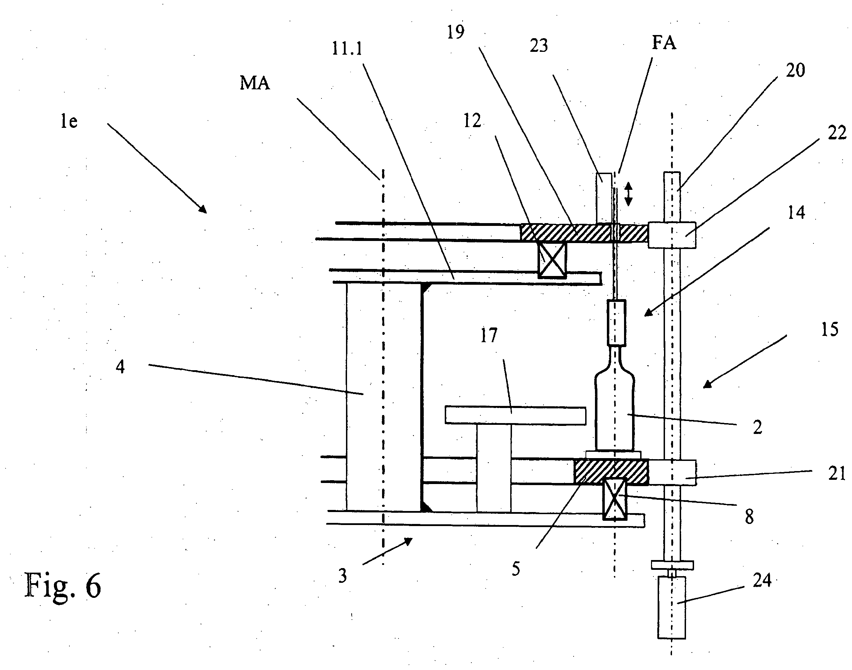

Die Figur 6 zeigt als weitere, nicht erfindungsgemäße Ausführungsform eine Behälterbehandlungsmaschine 1e, die sich von der Behälterbehandlungsmaschine 1d im Wesentlichen nur dadurch unterscheidet, dass für das Rotorelemente 5 und das Trägerelement 19 ein gemeinsamer Antrieb 24 vorgesehen ist, der über die Welle 20 und die an dieser vorgesehenen Zahnräder 21 und 22 beide Rotorelemente 5 und 19 gleichsinnig und synchron antreiben.

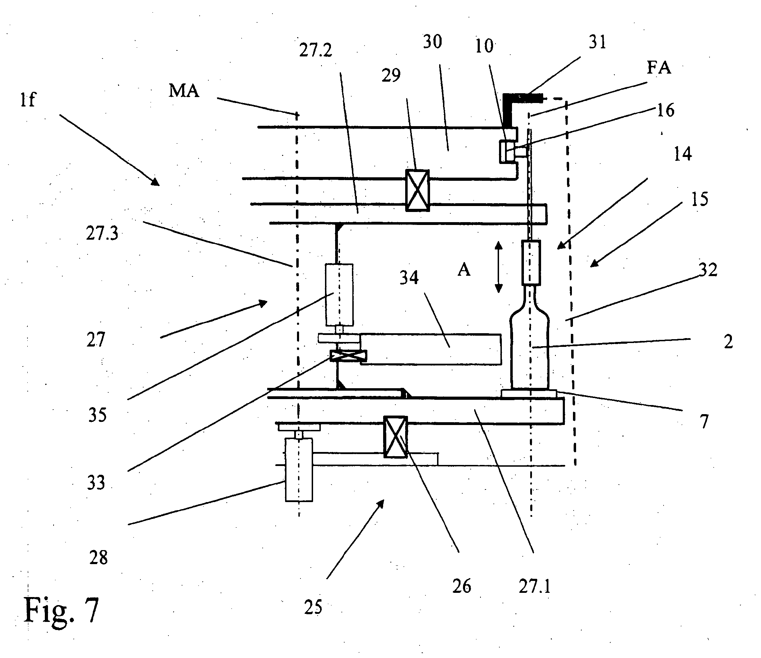

Die Figur 7 zeigt als weitere Ausführungsform eine Behälterbehandlungsmaschine 1f, die wiederum als Behandlungsmaschine umlaufender Bauart ausgebildet ist, und zwar mit dem um die vertikale Maschinenachse MA an einem Maschinengestell 25 über ein Lager 26 drehbar gelagerten Rotor 27. Der Rotor 27 bildet u.a. ein unteres Rotorelement 27.1 (Drehtisch), welcher an seinem Umfangsbereich die Flaschenteller 7 aufweist, ein oberes Rotorelement 27.2, an welchem die jeweils einem Flaschenteller 7 und damit einer Behandlungsposition 15 zugeordneten Zentriertulpen 14 und deren Stangen für ein gesteuertes Auf- und Abbewegen verschiebbar geführt sind, sowie ein säulenartiges, die Rotorelemente 27.1 und 27.2 mit Abstand verbindendes und achsgleich mit der Maschinenachse MA angeordnetes Rotorelement 27.3. Zum Antrieb des Rotors 27 um die Maschinenachse MA dient der Antrieb 28.

Auf dem Rotorelement 27.2 ist mittels wenigstens eines Lagers 29 ein Hubkurventräger 30 gelagert, der außen liegend die mit den Steuerrollen 16 der Zentrierelemente 14 zusammenwirkende Hubkurve 10 aufweist. Um ein Mitdrehen des Hubkurventrägers 30 mit dem Rotor 27 zu vermeiden, ist der Kurventräger 30 über wenigstens eine Drehmomentstütze 31 mit dem Maschinengestell 25 verbunden, wie dies in der Figur 7 mit der unterbrochenen Linie 32 angedeutet ist.

Hinsichtlich der Ausbildung des Rotors 27, des Hubkurventrägers 30 und dessen Verbindung mit dem Maschinengestellt 25 über wenigstens eine Drehmomentstütze 31 entspricht die Behälterbehandlungsmaschine 1f herkömmlichen Behandlungsmaschinen. Die Besonderheit der Behälterbehandlungsmaschine 1f besteht allerdings darin, dass innerhalb der Bewegungsbahn der Flaschenteller 7 bzw. der auf diesen positionierten Flaschen 2 an dem säulenartigen Rotorelement 27.3 mittels eines Lagers 33 ein Trägerelement 34 um die Maschinenachse MA drehbar gelagert ist. Das Trägerelement 34 ist bei einer dargestellten Ausführungsform kreisringförmig ausgebildet und achsgleich mit der Maschinenachse MA angeordnet.

Durch einen Antrieb 35 ist das Trägerelement 34 um die Maschinenachse MA synchron mit der Drehbewegung des Rotors 27, d.h. mit der selben Winkelgeschwindigkeit wie der Rotor 27, aber in entgegen gesetzter Drehrichtung antreibbar, sodass bei umlaufendem Rotor 27 das Trägerelement 34 stationär, d.h. nicht umlaufend ist. Die Antriebe 28 und 35 weisen hierfür entsprechend steuer- und regelbare Antriebsmotore (Synchron- oder Schrittmotore) auf, oder aber anstelle zweier getrennter Antriebe 28 und 35 ist ein gemeinsamer Antrieb mit einer die synchrone und gegenläufige Drehbewegung des Trägerelementes 34 erzeugende Getriebeanordnung vorgesehen. Das Trägerelement 34 ermöglicht als Träger die Anordnung von Funktionselementen innerhalb der kreisförmigen Bewegungsbahn, auf der die Flaschenteller 7 bzw. die auf diesen angeordneten Flaschen 2 bei umlaufendem Rotor 27 bewegt werden, beispielsweise die Anordnung von Bürsten oder anderen Elementen zum Anlegen von Etiketten an die Flaschen 2.

Die grundsätzliche Arbeitsweise der Behälterbehandlungsmaschinen 1, 1a - 1f entspricht herkömmlichen Maschinen, d.h. die jeweils zu behandelnden Flaschen 2 werden an einem Behältereinlauf jeweils nacheinander einer Behandlungsposition 15 bei zunächst angehobener Zentriertulpe 14 zugeführt, sodass jede Flasche 2 dann mit ihren Flaschenboden auf einem Flaschenteller 7 aufrecht stehend, d.h. mit der Flaschenachse in vertikaler Richtung orientiert angeordnet ist. Noch während der Übergabe wird die jeweilige Flasche, sobald sie sich auf dem Flaschenteller 7 befindet, durch Absenken der zugehörigen Zentriertulpe 14.1 auf die Flaschenoberseite zentriert und gegen Umfallen gesichert, und zwar durch Einspannen zwischen der Zentriertulpe 14.1 und dem Flaschenteller 7, so dass eine Behandlung der Flaschen 2 mit hoher Leistung der Behandlungsmaschine 1, 1a - 1f, d.h. mit hoher Drehgeschwindigkeit des jeweiligen Rotors möglich.

Die Behandlung der mit dem Rotor 5/6 bzw. 5/19 bzw. 27 mitbewegten Flaschen 2 erfolgt dann auf dem Winkelbereich der Drehbewegung des Rotors zwischen dem Behältereinlauf und einem Behälterauslauf, an dem die Flaschen 2 der jeweiligen Behandlungsposition 15 entnommen und hierbei durch Anheben der Zentriertulpe 14 freigegeben werden.

Die wesentlichen Vorteile der Behälterbehandlungsmaschinen 1, 1a - 1 e bestehen darin, dass Drehmomentstützen für Funktionselemente der Behälterbehandlungsmaschine, die (Funktionselemente) mit dem jeweiligen Rotor 5/6 bzw. 5/19 bzw. 27 nicht umlaufen, und damit verbundene aufwendige Konstruktionen zumindest weitestgehend vermieden sind und außerdem bei Ausbildung des unteren Rotorelementes 5 als Ring der innerhalb dieses Rotorelementes liegende Bereich für die erschütterungsfreie Unterbringung von mit dem Rotor 5/6 bzw. 5/19 nicht mitbewegten Funktionselementen, beispielsweise auch von Druckern oder Druckköpfen, von Kameras, von Sensoren usw. frei ist.

Die Behälterbehandlungsmaschine 1 b, 1 d und 1 e haben weiterhin den Vorteil, dass auch der von dem oberen umlaufenden Rotorelementen 19 umschlossene Raum für die Anordnung von mit dem Rotor 5/19 nicht umlaufenden Funktionselementen freigehalten ist.

Die Behälterbehandlungsmaschinen 1d und 1e haben den zusätzlichen Vorteil, dass konstruktiv aufwendigen Hubkurven 10 nicht benötigt werden, die Hubbewegung der Zentriertulpen 14.1, insbesondere auch hinsichtlich Größe der Hubbewegung zwischen der angehobenen und der abgesenkten Stellung der Zentriertulpen 14 bei einem Formatwechsel, d.h. bei einer Umstellung der Behälterbehandlungsmaschine von einer Behältergröße auf eine andere Behältergröße problemlos angepasst werden kann, und dass es vor allem auch möglich ist, die Anpresskraft, mit der die jeweils abgesenkte Zentriertulpe 14.1 gegen eine Flaschen 2 oder einen anderen Behälter anliegt, zu steuern und/oder zu regeln und damit u.a. an die mechanische Stabilität der verwendeten Behälter optimal anzupassen, was insbesondere auch bei Verarbeitung oder beim Behandeln von Behältern oder Flaschen 2 aus Kunststoff, z.B. von PET-Behältern oder-Flaschen von großer Bedeutung ist.

Die Behälterbehandlungsmaschine 1f ist zwar hinsichtlich der dort verwendeten Drehmomentstütze 31 an bekannte Behälterbehandlungsmaschinen angelehnt. Die Behälterbehandlungsmaschine 1f hat aber dennoch den Vorteil,
dass trotz der Ausbildung des unteren Rotorelementes 27.1 als scheibenartiger Drehtisch oder als speichenradartiges Element und damit trotz der sich hieraus ergebenden Möglichkeit einer vereinfachten Lagerung Funktionselemente innerhalb der kreisförmigen Bewegungsbahn der Flaschenteller 7 angeordnet werden können, die (Funktionselemente) mit dem Rotor 27 nicht umlaufen, und dass hierfür keine konstruktiv aufwendigen Drehmomentstützen erforderlich sind.

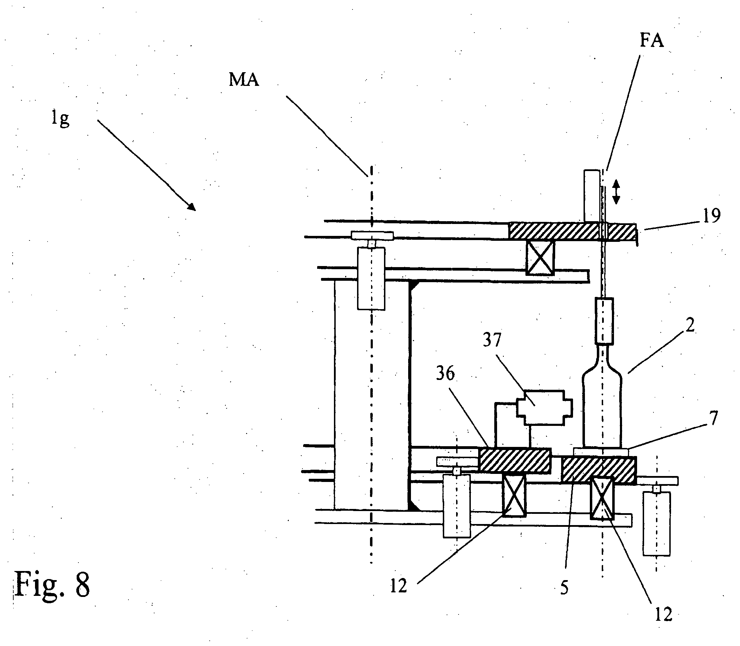

Die Figur 8 zeigt als weitere Ausführungsform eine Behälterbehandlungsmaschine 1g die sich von den anderen Behälterbehandlungsmaschinen im Wesentlichen nur dadurch unterscheidet, dass neben dem Rotorelement 5 und dem Trägerelement 19 ein weiteres Trägerelement 36 vorgesehen ist. Dieses Trägerelement 36 ist vorzugsweise als Kreisring ausgebildet, und ist mittels eines Lagers auf dem Maschinengestell gelagert.

Dieses weitere Trägerelement 36 ist innerhalb des Rotorelements 5 angeordnet und wird beispielsweise synchron zu diesem, also mit identischer Winkelgeschwindigkeit und -richtung angetrieben.
Auf dem Trägerelement 36 sind beispielsweise Behälterbehandlungsvorrichtungen 37 angeordnet, beispielsweise Druckköpfe zur Bedruckung der Behälter. Vorzugsweise ist für jeden, auf dem Rotor 5 angeordneten Flaschenteller 7 auf dem Trägerelement 36 eine Behälterbehandlungsvorrichtung 37 vorgesehen.

Da Rotor 5 und Trägerelement 36 die identische Winkelgeschwindigkeit und -richtung aufweisen, und da zusätzlich jedem Flaschenteller 7 eine Behälterbehandlungsvorrichtung 37 zugeordnet ist, ergibt sich, dass die Behälterbehandlungsvorrichtung 37 über die gesamte Wegstrecke des Behälters 2 zwischen Einlauf- und Auslaufstern auf diesen einwirken kann.

Beispielsweise steht einem als Behälterbehandlungsvorrichtung 37 vorgesehenem Druckkopf, beispielsweise einem Farbdruckkopf nun eine ausreichende Zeitspanne zur Verfügung, um den zugeordneten Behälter 2 wunschgemäß mehrfarbig zu bedrucken. Ebenfalls können als Behälterbehandlungsvorrichtungen 37 auch Sensoren zur Erfassung physikalischer Größen, Bild- oder Filmkameras oder ähnliches vorgesehen sein.

Allen Ausführungen ist weiterhin gemeinsam, dass die einzelnen Behandlungspositionen 15 sowohl bezogen auf die Maschinenachse MA radial außen I als auch in Drehrichtung sowie entgegen der Drehrichtung des jeweiligen Rotors 5/6, 5/19 bzw. 27 frei zugänglich sind, wie dies für das Zuführen und Entnehmen der Behälter oder Flaschen 2 an die Behandlungspositionen 15 bzw. von den Behandlungspositionen 15 und für die Behandlung der Behälter bzw. Flaschen 2 notwendig ist.

Die Erfindung wurde voranstehend an Ausführungsbeispielen beschrieben. Es versteht sich, dass weitere Änderungen sowie Abwandlungen möglich sind.

Im Hause der Anmelderin wurde für die vorliegende Innovation der Begriff "Eti mit unabhängigen Kreiseln" geprägt.

### Bezugszeichenliste

- 1, 1a-1g: Behälterbehandlungsmaschine
- 2: Behälter oder Flasche
- 3: Maschinengestell
- 4: Tragsäule
- 5: Rotorelement
- 6: Trägerelement
- 5/6: Rotor
- 7: Flaschenteller
- 8: Lager
- 9: Antrieb
- 9.1: Ritzel
- 10: Hubkurve
- 11: Hubkurventräger
- 11a: Trag- oder Lagerelement
- 12: Lager
- 13: Antrieb
- 13.1: Ritzel
- 14: Zentrierelement
- 14.1: Zentriertulpe
- 14.2: Zentriertulpenstange
- 15: Behandlungsposition
- 16: Steuerrolle
- 17: Träger- oder Bürstenhalter
- 18: Tragsäule
- 19: Trägerelement
- 5/19: Rotor
- 20: Welle
- 21, 22: Zahnrad
- 23: Betätigungselement
- 24: Antrieb
- 25: Maschinenrahmen
- 26: Lager
- 27: Rotor
- 27.1, 27.2, 27.3: Rotorelement
- 28: Antrieb
- 29: Lager
- 30: Hubkurventräger
- 31: Drehmomentstütze
- 32: Linie
- 33: Lager
- 34: Trägerelement
- 35: Antrieb
- 36: Trägerelement
- 37: Behälterbehandlungsvorrichtung

- A: Hubbewegung der Zentriertulpen 14
- MA: Maschinenachse

## Patentansprüche

1. Behandlungsmaschine umlaufender Bauart zum Behandeln von Behältern (2), mit einem um eine vertikale Maschinenachse umlaufend antreibbaren und als Behälterträger dienenden oder Behälterträger (7) aufweisenden Rotorelement (5, 27.1) sowie mit wenigstens einem um die vertikale Maschinenachse ebenfalls umlaufend antreibbaren Trägerelement (6, 19, 34) für wenigstens ein Funktionselement der Maschine, beispielsweise für wenigstens ein mit den Behältern (2) zusammenwirkendes Funktionselement, wobei das Rotorelement (5, 27.1) und das wenigstens eine Trägerelement (6, 19, 34) als eigenständige umlaufende Elemente ausgebildet sind, welche jeweils unabhängig voneinander um die vertikale Maschinenachse (MA) drehbar gelagert sind, wobei das wenigstens eine Rotorelement (5) kreisringförmig und mit seiner Ringachse achsgleich mit der Maschinenachse (MA) ausgebildet ist und/oder wobei das wenigstens eine Trägerelement (19, 34) kreisringförmig und die Maschinenachse (MA) konzentrisch umschließend ausgebildet ist, und wobei Antriebsmittel (9, 13; 28, 35) für eine synchrone, d.h. drehzahl- und winkelgenaue Drehbewegung des wenigstens einen Rotorelementes (5, 27.1) und des wenigstens einen Trägerelementes (6, 19, 34) vorgesehen sind, **dadurch gekennzeichnet, dass** die Antriebsmittel jeweils von eigenständigen, einen eigenen Antriebsmotor, beispielsweise einen Servomotor oder Schrittmotor aufweisenden Antrieben (9, 13, 28, 35) gebildet sind.

2. Behälterbehandlungsmaschine nach Anspruch 1, **dadurch gekennzeichnet, dass** das wenigstens eine Rotorelement (5) und das wenigstens eine Trägerelement (6, 19) unabhängig voneinander an einem mit diesen Elementen nicht umlaufenden Maschinenrahmen (3, 3a) gelagert sind.

3. Behälterbehandlungsmaschine nach Anspruch 1 oder 2, **dadurch gekennzeichnet, dass** im Fall, dass nur das Trägerelement (34) kreisringförmig ausgebildet ist, das wenigstens eine Rotorelement (5, 27.1) ein Scheiben- oder speichenradartiger Drehtisch ist.

4. Behälterbehandlungsmaschine nach Anspruch 1 oder 2, **dadurch gekennzeichnet, dass** im Fall, dass nur das wenigstens eine Rotorelement (5) kreisringförmig ausgebildet ist, das wenigstens eine Trägerelement (6) scheiben- oder speichenradartig ausgebildet ist.

5. Behälterbehandlungsmaschine nach einem der vorhergehenden Ansprüche, **dadurch gekennzeichnet, dass** das wenigstens eine Trägerelement (6, 19) ein weiteres Rotorelement für mit einem aus dem Rotorelement (5) und dem Trägerelement (6, 19) bestehenden Rotor (5/6, 5/19) mitbewegte und/oder mit den Behältern (2) zusammenwirkende Funktionselemente (14) ist, welches vorzugsweise mit wenigstens einem eigenständigen Lager (12) um die Maschinenachse (MA) drehbar gelagert ist, beispielsweise an einem Maschinengestell (3, 3a).

6. Behälterbehandlungsmaschine nach Anspruch 5, **dadurch gekennzeichnet, dass** die an dem Trägerelement (6, 19) vorgesehenen mit den Behältern (2) zusammenwirkende Funktionselemente gesteuert bewegbare Zentrierelemente oder Zentrierglocken (14) sind.

7. Behälterbehandlungsmaschine nach Anspruch 6, **gekennzeichnet, durch** wenigstens eine Steuerkurve, z.B. Hubkurve (10) an einem mit dem Rotor (5/6, 5/19) nicht mitdrehenden Teil oder Steuerkurventräger (11) des Maschinengestells (3, 3a), sowie durch in die wenigstens eine Steuerkurve (10) eingreifende Steuerelemente (16) zum gesteuerten Bewegen der Funktionselemente (14).

8. Behälterbehandlungsmaschine nach einem der Ansprüche 5 - 7, **gekennzeichnet durch** Betätigungs- oder Stellmittel (23) an dem wenigstens einen Trägerelement (6, 19) zum motorischen gesteuerten Bewegen der an diesem Trägerelement (6, 19) vorgesehenen Funktionselemente (14).

9. Behälterbehandlungsmaschine nach Anspruch 8, **dadurch gekennzeichnet, dass** die Betätigungs- oder Stellmittel (23) wenigstens ein hydraulisches, pneumatisches oder elektrisches Stellglied aufweisen.

10. Behälterbehandlungsmaschine nach einem der vorhergehenden Ansprüche, **dadurch gekennzeichnet, dass** bei Ausbildung des wenigstens einen Trägerelementes (6, 19) als weiteres Rotorelement die Antriebmittel (9, 13, 28) für eine gleichsinnige Bewegung des wenigstens einen Rotorelementes (5) und des wenigstens einen Trägerelementes (6, 19) ausgebildet sind.

11. Behälterbehandlungsmaschine nach einem der vorhergehenden Ansprüche, **dadurch gekennzeichnet, dass** bei Ausbildung des wenigstens einen Trägerelementes (34) als Träger für mit dem Rotorelement (27) nicht mitbewegte Funktionselemente die Antriebmittel (35) für eine gegensinnige Bewegung des wenigstens einen Rotorelementes (27.1) und des wenigstens einen Trägerelementes (34) ausgebildet sind.

12. Behälterbehandlungsmaschine nach einem der vorhergehenden Ansprüche, **gekennzeichnet durch** ihre Ausbildung als Maschine zum Etikettieren und/oder Bedrucken und/oder Inspizieren von Behältern.

## Claims

1. Container treatment machine of the rotary type for treating containers (2), including a rotor element (5, 27.1) capable of being driven about a vertical machine axis and serving as a container carrier or comprising a container carrier (7), and including at least one carrier element (6, 19, 34), also capable of being driven such as to rotate about the vertical machine axis for at least one function element of the machine, for example, for at least one function element interacting with the containers (2), wherein the rotor element (5, 27.1) and the at least one carrier element (6, 19, 34) are configured as independent circulating elements, which in each case are mounted such as to be rotatable about the vertical machine axis (MA) independently of one another, wherein the at least one rotor element (5) is configured as annular and with its annular axis coaxial with the machine axis (MA) and/or wherein the at least one carrier element (19, 34) is configured as annular and concentrically surrounding the machine axis (MA) and wherein drive means (9, 13; 28, 35) are provided for a synchronous rotational movement, i.e. with precise rotation speed and angle, of the at least one rotor element (5, 27.1) and the at least one carrier element (6, 19, 34), **characterized in that** the drive means are formed in each case by an independent drive motor, such as a drive (9, 13, 28, 35) comprising a servomotor or stepped motor.

2. Container treatment machine according to claim 1, **characterised in that** the at least one rotor element (5) and the at least one carrier element (6, 19) are mounted independently of one another on a machine frame (3, 3a) which does not circulate with these elements.

3. Container treatment machine according to claim 1 or 2, **characterised in that**, in the situation in which only the at least one carrier element (34) is configured as annular, the at least one rotor element (5, 27.1) is a rotary table in the form of a disk or spoked wheel.

4. Container treatment machine according to claim 1 or 2, **characterised in that**, in the situation in which only the at least one rotor element (5) is configured as annular, the at least one carrier element (6) is a rotary table in the form of a disk or spoked wheel.

5. Container treatment machine according to any one of the preceding claims, **characterised in that** the at least one carrier element (6, 19) is a further rotor element for function elements (14) which are moved with a rotor (5/6, 5/19), consisting of the rotor element (5) and the carrier element (6, 19), and/or interacting with the containers (2), which is preferably mounted with at least one independent bearing (12) such as to be capable of rotating about the machine axis (MA), for example at a machine frame (3, 3a).

6. Container treatment machine according to claim 5, **characterised in that** the function elements provided for at the carrier element (6, 19) interacting with the containers (2) are centring elements or centring bell elements (14), capable of being moved in a controlled manner.

7. Container treatment machine according to claim 6, **characterised by** at least one control curve, such as a lifting curve (10), at a part which does not rotate together with the rotor (5/6, 5/19), or at a control curve carrier (11) of the machine frame (3, 3a), and by control elements (16) engaging into the at least one control curve (10), for the controlled movement of the function elements (14).

8. Container treatment machine according to any one of claims 5-7, **characterised by** actuation or adjustment means (23) at the at least one carrier element (6, 19), for the motor-controlled movement of the function elements (14) provided at this carrier element (6, 19).

9. Container treatment machine according to claim 8, **characterized in that** the actuation or adjustment means (23) comprise at least one hydraulic, pneumatic, or electrical adjustment element.

10. Container treatment machine according to any one of the preceding claims, **characterised in that**, with the configuration of the at least one carrier element (6, 19) as a further rotor element, the drive means (9, 13, 28) are configured for a congruent movement of the at least one rotor element (5) and of the at least one carrier element (6, 19).

11. Container treatment machine according to any one of the preceding claims, **characterised in that**, with the configuration of the at least one carrier element (34) as a carrier for function elements which are not moved with the rotor element (27), the drive means (35) are configured for a congruent movement of the at least one rotor element (27.1) and of the at least one carrier element (34).

12. Container treatment machine according to any one of the preceding claims, **characterised by** their configuration as a machine for labelling and/or printing and/or inspecting of containers.

## Revendications

1. Machine de traitement de contenant de type rotatif servant à traiter des contenants (2), comprenant un élément de rotor (5, 27.1) pouvant être entraîné en rotation autour d'un axe de machine vertical, faisant office de support de contenant ou présentant des supports de contenant (7), ainsi qu'au moins un élément de support (6, 19, 34) pouvant être entraîné de la même manière en rotation autour de l'axe de machine vertical pour au moins un élément fonctionnel de la machine, par exemple pour au moins un élément fonctionnel coopérant avec les contenants (2), sachant que l'élément de rotor (5, 27.1) et l'élément de support (6, 19, 34) au moins au nombre de un sont réalisés sous la forme d'éléments en rotation autonomes, qui sont montés de manière à pouvoir tourner respectivement indépendamment les uns des autres autour de l'axe de machine (MA) vertical, dans lequel l'élément de rotor (5) au moins au nombre de un est réalisé de manière à présenter une forme annulaire circulaire et, par son axe annulaire, de manière coaxiale avec l'axe de machine (MA), et/ou dans lequel l'élément de support (19, 34) au moins au nombre de un est réalisé de manière à entourer de manière concentrique l'axe de machine (MA), et dans lequel des moyens d'entraînement (9, 13, 28, 35) sont prévus pour un déplacement en rotation synchrone, en d'autres termes précis en termes de vitesse de rotation et d'angle, de l'élément de rotor (5, 27.1) au moins au nombre de un et de l'élément de support (6, 19, 34) au moins au nombre de un, **caractérisée en ce que** les moyens d'entraînement sont formés respectivement par un entraînement (9, 13, 28, 35) autonome présentant un moteur d'entraînement propre, par exemple un servomoteur ou un moteur pas à pas.

2. Machine de traitement de contenant selon la revendication 1, **caractérisée en ce que** l'élément de rotor (5) au moins au nombre de un et l'élément de support (6, 19) au moins au nombre de un sont montés indépendamment les uns des autres au niveau d'un bâti de machine (3, 3a) ne tournant pas avec lesdits éléments.

3. Machine de traitement de contenant selon la revendication 1 ou 2, **caractérisée en ce que** si seul l'élément de support (34) au moins au nombre de un est réalisé de manière à présenter une forme annulaire circulaire, l'élément de rotor (5, 27.1) au moins au nombre de un est un plateau rotatif de type disque ou de type roue à rayons.

4. Machine de traitement de contenant selon la revendication 1 ou 2, **caractérisée en ce que** si seul l'élément de rotor(5) au moins au nombre un est réalisé de manière à présenter une forme annulaire circulaire, l'élément de support (6) au moins au nombre de un est réalisé à la manière d'un disque ou d'une roue à rayons.

5. Machine de traitement de contenant selon l'une quelconque des revendications précédentes, **caractérisée en ce que** l'élément de support (6, 19) au moins au nombre de un est un autre élément de rotor pour des éléments fonctionnels (14) déplacés avec un rotor (5/6, 5/19) constitué de l'élément de rotor (5) et de l'élément de support (6, 19) et/ou coopérant avec les contenants (2), lequel autre élément de rotor est monté de manière à pouvoir tourner autour de l'axe de machine (MA) de préférence avec au moins un palier (12) autonome, par exemple au niveau d'un bâti de machine (3, 3a).

6. Machine de traitement de contenant selon la revendication 5, **caractérisée en ce que** les éléments fonctionnels prévus au niveau de l'élément de support (6, 19), coopérant avec les contenants (2) sont des éléments de centrage ou des cloches de centrage (14) pouvant être déplacés de manière commandée.

7. Machine de traitement de contenant selon la revendication 6, **caractérisée par** au moins une came de commande, par exemple une came de levage (10) au niveau d'une partie ou d'un support de came de commande (11), non entraîné(e) en rotation avec le rotor (5/6, 5/19), du bâti de machine (3, 3a), ainsi que par des éléments de commande (16) venant en prise avec la came de commande (10) au moins au nombre de une, servant à déplacer de manière commander les éléments fonctionnels (14).

8. Machine de traitement de contenant selon l'une quelconque des revendications 5 - 7, **caractérisée par** des moyens d'actionnement ou de réglage (23) au niveau de l'élément de support (6, 19) au moins au nombre de un servant à déplacer de manière commandée et motorisée les éléments fonctionnels (14) prévus au niveau dudit élément de support (6, 19).

9. Machine de traitement de contenant selon la revendication 8, **caractérisée en ce que** les moyens d'actionnement ou de réglage (23) présentent au moins un organe de réglage hydraulique, pneumatique ou électrique.

10. Machine de traitement de contenant selon l'une quelconque des revendications précédentes, **caractérisée en ce que** lors de la réalisation de l'élément de support (6, 19) au moins au nombre de un sous la forme d'un autre élément de rotor, les moyens d'entraînement (9, 13, 28) sont réalisés pour un déplacement dans le même sens de l'élément de rotor (5) au moins au nombre de un et de l'élément de support (6, 19) au moins au nombre de un.

11. Machine de traitement de contenant selon l'une quelconque des revendications précédentes, **caractérisée en ce que** lors de la réalisation de l'élément de support (34) au moins au nombre de un sous la forme d'un support pour les éléments fonctionnels non déplacés avec l'élément de rotor (27), les moyens d'entraînement (35) sont réalisés pour un déplacement dans le sens inverse de l'élément de rotor (27.1) au moins au nombre de un et de l'élément de support (34) au moins au nombre de un.

12. Machine de traitement de contenant selon l'une quelconque des revendications précédentes, **caractérisée par** sa réalisation sous la forme d'une machine servant à étiqueter et/ou imprimer et/ou inspecter des contenants.
